# EUROPEAN PATENT APPLICATION

(11) **EP 0 597 352 A2**
(43) Date of publication of application: **18.05.1994**
(21) Application number: 93117720.8
(22) Date of filing: 02.11.1993
(51) Int. Cl.: F02P 1/08, H02J 7/14, F02P 3/08, G05F 1/62

(54) **Electronic ignition system for internal combustion engines with differentiated load supply system**

(30) Priority: 09.11.1992 IT MI922564
(71) Applicant: DUCATI ENERGIA S.p.A., I-40132 Bologna (IT)
(72) Inventor: Biondi, Astorre, I-40017 S.G. Persiceto (IT); Regazzi, Gianni, 40100 Bologna (IT); Venturoli, Alessandro, I-40100 Bologna (IT)
(74) Representative: Coloberti, Luigi

(57) **Abstract**

An electronic ignition system for internal combustion engines, of capacitor discharge type. The system comprises a magneto generator (10) for supplying the electrical power to a capacitive-discharge ignition module (12) and to a service load circuit (13); the output of the generator (10) may be connected to service load circuit (13) by an ON/OFF voltage regulator (T1), and to the ignition module (12) by a voltage booster (T3) and an electronic switch (T2). A process logic unit (16) controls the whole ignition system and is programmed to actuate the voltage regulator, the electronic switch and the booster (T1, T2, T3) of the ignition system so that the ignition capacitor (C) is charged and the service load circuit (13) is supplied in a differentiated manner and at different times.

## Description

The present invention relates to an electronic ignition system of capacitor discharge type for internal combustion engines, intended to be used especially although not exclusively for motorcycles and the like, and more particularly relates to an ignition apparatus comprising an electronic control system providing a differentiated power supply to electrical loads and to a capacitor of the ignition system while allowing a rational use of the electric power available at the output of the magneto generator.

In the field of motor vehicles various ignition control systems are known which provide for the use of an electric battery as a primary power source, or the use of a magneto generator, such as an alternator provided with different windings for supplying various electric loads of the vehicle, such as the engine ignition circuit and other service load circuits.

US-A- 3.312.860 and US-A- 4.323.216 are examples of the first ignition systems which use an electric battery as a primary power source. Systems of this kind, even if controllable by a microprocessor, necessarily require the use of suitable voltage boostering devices for supplying the electric energy from the battery, normally available at a voltage of 12 Volts, to a higher value voltage, for example a few hundred Volts required for the successful ignition operation.

These systems have the disadvantage of only operating with the presence of the supply battery and of being complex in construction in that they require the use of a high frequency transformer, and relevant control circuitry for raising the voltage required for the proper operation of the ignition circuit. Moreover, in order to maintain the battery constantly at an optimum charge level, it is possible to provide for the use of an appropriate voltage generator for charging the battery. These systems, in addition to being unsuitable for the use or for applications wherein the use of a supply battery is not provided, for example in motor vehicles and the like, are relatively expensive to manufacture due to their excessive complexity.

US-A- 3.242.420, US-A- 3.933.139 and US-A-4.565.179, are representative of ignition system of the second type which make use of a magneto generator as a primary power source. However in this type of ignition system, different windings have to be provided in the generator for supplying the power to the ignition circuit, as well for picking up synchronism signals and for supplying a low voltage power to other electric loads of the vehicle or other appliances provided with a similar ignition system.

The ignition systems which use an electric generator as a primary power source have the disadvantage of being unreliable in that the winding for supplying the ignition circuit normally consists of a high number of turns, in the order of a few thousands, made with thin copper wire, to supply the voltage required for charging the capacitor. These windings, in addition to being difficult to manufacture, also require special techniques such as for example the use of short-circuit turns for limiting the maximum value of the voltage generated to avoid excessive heating. Furthermore the known ignition systems usually require different windings to operate at low-speed and high-speed of the magneto generator.

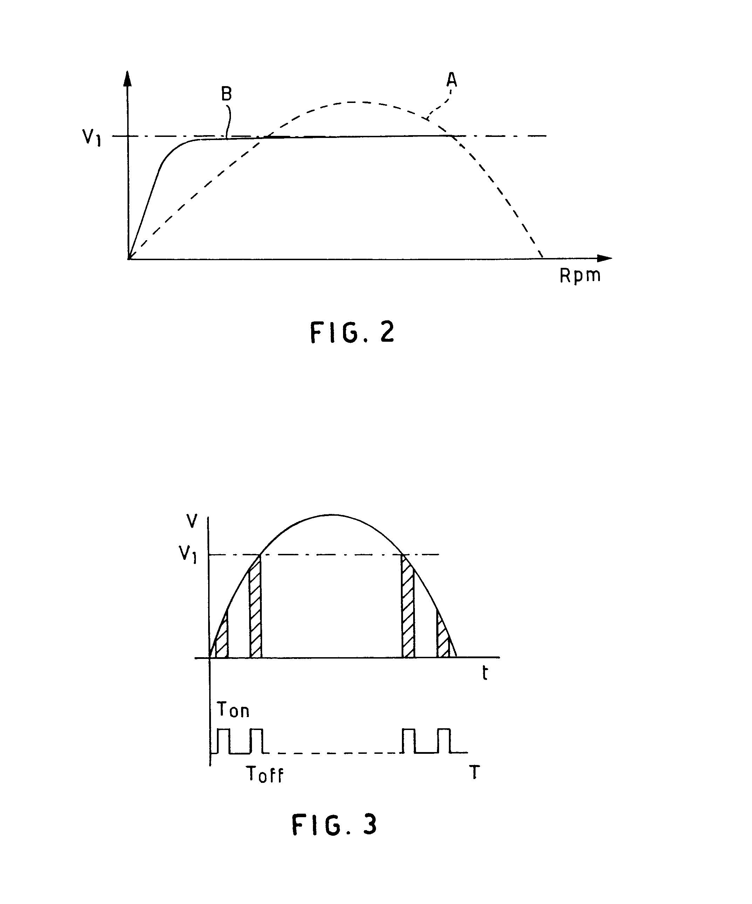

This systems in addition to being complex and expensive to manufacture, does not allow good energy efficiency to be achieved both due to the excess of the electric power generated for supplying the ignition circuit wich has to be dissipated, thus wasting energy useful for supplying other electric loads, and due to the fact that the charging voltage for the ignition capacitor takes on the typical "bell" curve as the rotational speed of the engine changes. Such a bell curve is for example represented by curve A in Fig. 2 of the accompanying drawings. It is therefore clear that in the ignition systems which use electric generators the supply voltage cannot be maintained at optimum operational levels.

In the attempt to simplify the construction of the ignition systems prevently known, US-A-4.478.200 and US-A- 4.537.174 suggest the use of an electronic ignition device including a magneto generator having substantially a single generating coil and change over circuit to change over the supply of electrical power from the capacitor of the ignition circuit, to an electrical load circuit. In particular according to the US-A- 4.537.174 the energy for the ignition and any other load is obtained with a high induced voltage produced upon a rapid interruption of a short-circuit current flowing in the generating coil once a half cycle only; a constant voltage supply for the ignition system is therefore operated by the output current of the magneto generator preceding the interruption of the short-circuit. A regulator transfers the excess output of the magneto generator to a battery or other electrical load in response to an over voltage.

Usually the charging voltage for ignition capacitor is within the range between 200V and 300V while the voltage required for the electrical load of a motorvehicle is of about 6V or 12V. Therefore, according to US-A- 4.478.200 an additional step up transformer is required to provide the required high voltage for charging the capacitor. Owing to the necessity of said transformer to work at low running of the engine also it will require windings having a relevant number of turns resulting in an heavy and cumbersome construction; furthermore the use of a step-up transformer does not resolve the problem inherent to bell curve for the charging voltage of the ignition capacitor thus resulting in low operational level.

On the contrary although the US-A- 4.537.174 allows to partially improve the operational level of the ignition system, nevertheless it does not provide an appreciable solution or does not allow to optimise the use of electrical power outcoming from the magneto generator because the energy usefull for supplying the ignition capacitor each half-cycle, again depend on, or is deeply influenced by the rotational speed of the engine. Furthermore the risk exists to have the fully charged capacitor short-circuited over the SCR controlling the discharging time, worsening the efficiency of the system and requiring an oversizing of the involved electrical components.

It is an object of the present invention to provide an improved electronic ignition system of type mentioned above, which makes use of a special electronic control circuit in combination with a magneto generator having substantially a single generating coil for supplying both the ignition circuit of an engine and other electric loads while maintaining the voltages at substantially constant and optimum levels, completely independent of the number of the rotational speed of the engine.

It is another object of the present invention to provide an electronic ignition system for internal combustion engines, provided with an electronic control device for a differentiated energy supply of both service electric loads and a ignition circuit, maintaining an extremely reliable operation which, in addition to allowing simple generator to be used, also allows a more rational use of the available electric power.

A further object of the present invention is to provide an ignition system of the kind referred to above, which is both simply to manufacture and relatively less expensive, providing at the same time an appropriate control of the load and ignition supply voltages.

The above is made possible by means of an electronic ignition system for internal combustion engines comprising the features of the main claim. According to the general principle of the present invention a single source of power is used, such as a magneto generator having a single generating coil for supplying both the ignition circuit of the engine and other service load circuits of the vehicle or equipment on which it is installed, providing a voltage boostering device comprising the inductance of the single coil of the generator in combination with electronic switches controlled by a process logic unit which provide for the separate supply of the ignition circuit, and service loads respectively, at different times on the basis of control signals provided by sensing means continuously detecting the operative conditions of the engine.

The general features of the present invention and a preferred embodiment thereof are to be illustrated hereinunder with reference to the accompanying drawings, in which:
Fig. 1 shows the general diagram of an electronic ignition system according to the present invention;
Fig. 2 is a graph comparing the charge voltage of the ignition capacitor of the system in Fig. 1, with that of a traditional ignition system;
Fig. 3 is a graph illustrating an operation mode of the ignition device in Fig. 1.

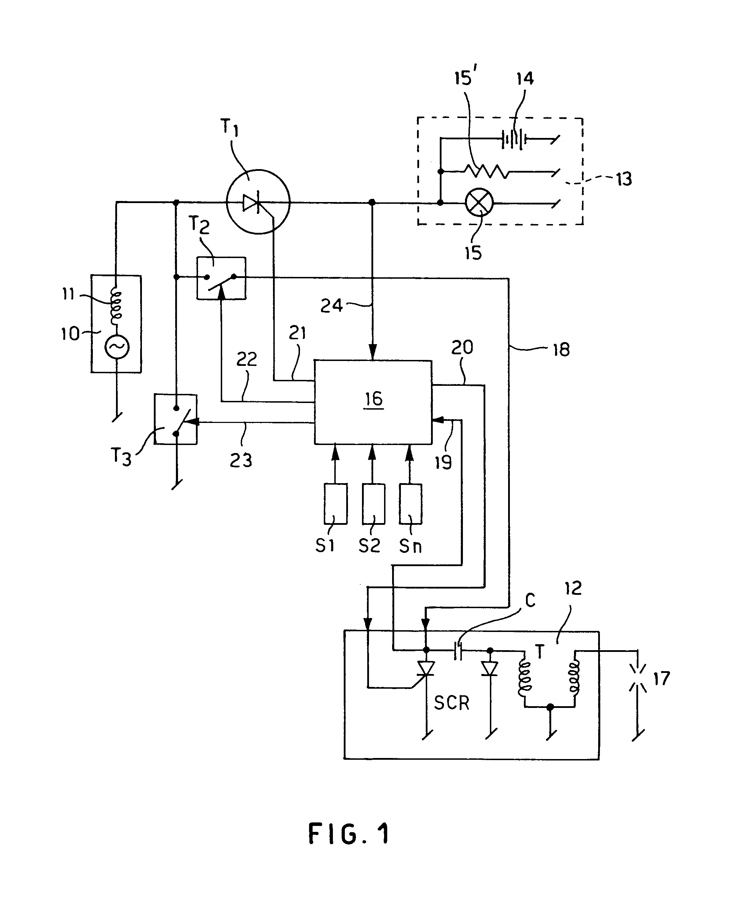

As shown in Figure 1, the ignition system for an internal combustion engine, according to the present invention, substantially comprises an electric AC generator 10, hereinafter referred to as magneto generator having substantially a single rotor winding 11 for supplying the electric power both to the module of an ignition circuit 12 of an internal combustion engine, and to other electric load circuit 13 of a motor vehicle, or any other appliance on which this ignition system is used, and which may comprise for example an auxiliary battery 14, the lights 15 of the vehicle or another load 15' to be supplied. The system is controlled by a process logic unit 16, such as a microprocessor, or a digital control device having data inlet ports which receive informations on working parameters S1, S2, Sn corresponding to operative conditions of the engine, and which processes said data to supply appropriate control signals on one or more outputs 20, 21, 22, 23, as shown. In Fig. 1, reference numeral 11 schematically denotes the synchronous inductance of the single coil of the magneto generator.

The ignition circuit of the module 12 may be of any desired type; in general it comprises a voltage step-up transformer T having secondary winding or coil connected to the electric spark-plug of the engine, as well as a primary winding or coil connected to a ignition capacitor C supplied by the electrical power generated by the coil 11 of the magneto generator 10, via a connection path 18 comprising an electronic switch T2 for changing over the power provided by the magneto generator 10 and to control the charge voltage of the capacitor C; switch T2 has its control inlet connected to the output 22 of the logic unit 16; T2 may be any electronic switch device of the type known, such as a transistor, a SCR or a MOS switch, which can be controlled by the process logic unit 16, as shown. Correspondingly, the charging and discharging of the capacitor C of the ignition circuit can be usually controlled by a second electronic switch in the same circuit, for example an SCR, whose control gate is connected to an output 20 of the logic unit 16.

Reference 19 in Fig. 1 denotes moreover a connection between the positive terminal of the capacitor C and a corresponding data inlet of the process logic unit 16 which can in this way receive informations on the charge voltage values of the capacitor C. T1 in Fig. 1 optionally denotes an auxiliary ON/OFF voltage regulator, connected in series between the coil 11 of the generator and the load circuit 13, for controlling the supply voltage to the loads during operation; the voltage regulator T1 may be of any desired type and is functionally comparable to an electronic switch device whose control gate is connected to a control signal output 21 of the process logic unit 16.

According to a further feature of the present invention, in order to regulate to a substantially constant value V1 the voltage supplied to the ignition circuit 12, as indicated by the curve B in Fig. 2, even when the voltage provided by the generator 10 is lower than V1, a further voltage regulator has been provided comprising an electronic switch device T3 branched-off by the connection between the coil 11 and the electronic switch T2 for controlling the charge voltage of the capacitor C, said switch T3 defining a short-circuiting means for the coil 11 having a control inlet in turn connected to a control output 23 of the process logic unit 16. The electronic switch T3 is therefore connected to T2 and to the stator winding 11 of the magneto generator to perform a dual function that is a boostering action to increase the charge voltage fed to the capacitor C, and rapidly actuable ON/OFF voltage regulating actions during positive one-half cycle outputs of magneto generator 10 for the supply voltages of the capacitor C and service load circuit 13. It is however clear that the various electronic components of the circuit shown may be replaced by other elements or by equivalent circuitry solutions, without thereby departing from the inventive principal of the present invention.

The innovative features of the ignition system according to the invention may be understood further from the following working description, with reference to Fig. 1 and to the graphs in Figs. 2 and 3.

### Charge phase of the ignition capacitor:

during this phase, the process logic unit 16 bring out of operation of the voltage regulator T1 preventing the supply of load circuit 13, while bring into operation the switch T2, allowing to supply the power to the ignition circuit 12. If the voltage provided by the magneto generator 10 is lower than the voltage V1 required to charge the ignition capacitor C, then the logic unit 16, as indicated schematically in the graph in Fig. 3, repeatedly trigger on and off the electronic switch T3 of the voltage booster comprising the same switch T3 and the internal inductance of the coil 11 of the magneto generator, with a suitable frequency provided by an appropriate Ton/Toff ratio between the closing time Ton, and opening time Toff in which Ton and Toff are depending on the features of the generator and on the rotational speed of the engine. More precisely Ton period is inversely proportional to the voltage of the magneto generator; Toff likewise is inversely proportional to the voltage of the ignition capacitor C; while both Ton and Toff are directly proportional to the inductance of coil 11 of the magneto generator. In this way a voltage boostering device is obtained which allows the required voltage value V1 to be obtained on the ignition capacitor C, exploiting the energy accumulated in the inductance 11 of the generator, represented by the dotted areas in Fig. 3.

When the logic unit 16 detects at its input 19 that the required charge voltage is present on the ignition capacitor C, it commands the switch off of the switches T2 and T3 since the supplying phase for the ignition capacitor C has ended.

At this stage the second operational phase for supplying and controlling the voltage to the loads 13 can begin, in a fully independent and differentiated manner from the previous phase.

The voltage at the loads 13 can be controlled in two different or combinable ways:
First regulation mode: according to this first mode of operation, a serial voltage regulation may be performed by means of the voltage regulator T1, when provided that is to say by switching off T1 to interrupt the supply to the loads 13 when the voltage thereon tends to exceed a prefixed value, or switching on T1 when this voltage tends to drop below the abovementioned value, while T2 and T3 remain switched off. The logic unit 16 senses at its input 24 the value of the voltage on the loads 13 and consequently control the switching on and off of T1 via control signals on its outlet 21, while maintaining T2 and T3 switched off through control signals at its outlets 22 and 23.

Second regulation mode: the voltage to the loads 13 can be regulated also by a second mode of operation, through a branched off regulation circuit, comprising the switch T3 by short-circuiting the generator 10 towards earth, when the voltage on the loads 13 tends to increase, or vice versa to switch on T3, maintaining T1 closed and T2 opened.

The system for regulating the voltages at the ignition circuit 12 and at the loads 13, is therefore controlled by the process logic unit 16, by means of T1, T2 and T3 maintaining the charging phases of the ignition capacitor C and the supplying phases of the loads 13 constantly separate in time, so that they occur in a manner fully differentiated one from the other. Moreover the logic unit 16, on the basis of the information received by the various sensors S1, S2, Sn, at the appropriate time sends a command to discharge the capacitor C of the ignition module 12, and if necessary also to other actuators connected thereto, in this way controlling the whole ignition system in a manner co-related to running of the engine. Thus the objects and advantages previously referred are achieved, in respect of traditional ignition systems, and more particularly a considerable constructional simplification, a reduction in the costs of the entire system, its greater operating reliability and a rational exploitation of the energy made available by the generator 10 are allowed. Therefore, the charge voltage of the capacitor C can be maintained at a constant value, as shown by the curve B in Fig. 2, in relation to a bell curve A of the same voltage according to traditional ignition systems.

It is clear therefore that what has been said and shown with reference to the example in Fig. 1, has been given purely by way of a non-limiting example of the innovative principles of the invention.

## Claims

1. An electronic ignition system of the capacitor discharge type for an internal combustion engine, comprising:
- a magneto generator (10) including substantially a single generating coil (11) having an output for generating an alternating electric voltage in synchronism with the speed of the engine;
- an electronic ignition module (12) comprising a capacitor (C) connected to the output of said magneto generator (10) to be charged by said electric voltage, respectively connected to the ignition coil (T) of a spark-plug (17);
- an electrical load circuit (13) connected to said output of the magneto generator (10), and change-over switch means (T2) to change over the power generated by said magneto generator (10) from the capacitor (C) to the electrical load circuit (13);
- and a voltage regulator circuit, said voltage regulator circuit comprising short-circuiting switch means (T3) having a control inlet, for short-circuiting the output of said magneto generator (10);
characterised in that said voltage regulator circuit comprises said voltage generating coil (11) of the magneto generator (10) and said short-circuiting switch means (T3) connected to the ignition module (12) by said change over switch means (T2);
said voltage generating coil (11) of the magneto generator (10), and said short-circuiting switch means (T3) defining a voltage boostering device, said voltage boostering device comprising the inductance of said magneto generator (10) and respectively said short-circuiting switch means (T3) branched-off from the connection between said voltage generating coil (11) of the magneto generator and said change-over switch means (T2);
- and a process logic unit (16) connected to the control inlets of said change-over switch means (T2) and of said short circuiting means (T3), said process logic unit (16) being programmed to actuate said change-over switch means (T2) to supply the power to the ignition module (12) and to said electrical load circuit (13) during different periods of time, respectively to repeatedly actuate said voltage boostering device (11, T3) during positive one-half cycle outputs of the magneto generator (10), on the basis of control signals provided to the process logic unit (16) by sensors (S) detecting operative conditions of the engine.

2. An electronic ignition system according to claim 1, characterised in that said voltage generating coil (11) of the magneto generator (10) is connected in series to the electric load circuit (13) by an ON/OFF voltage regulator (T1) of said voltage regulator circuit, said ON/OFF voltage regulator having a control inlet connected to control outlet (21) of said process logic unit (16).

3. An electronic ignition system according to Claim 1, characterised in that said process logic unit (16) is programmed to actuate said short-circuiting switch means (T3) of said voltage boostering device when the output voltage from the magneto generator (10) is lower than the charging voltage (V1) for the capacitor (C); a control connection being also provided between the ignition capacitor (C) and a data inlet of the process logic unit (16) to constantly supply the latter with informations indicative of the charge voltage value of the capacitor (C).

4. An electronic ignition system according to Claims 1 and 2, characterised in that a branched off connection (24) is provided between said electrical load circuit (13) and a data inlet of the process logic unit (16) to supply the latter with a control signal indicative of the value of the voltage fed to the ab- ovementioneed electrical load circuit (13).
